# EUROPEAN PATENT SPECIFICATION

(11) **EP 4 755 715 B1**
(45) Date of publication and mention of the grant of the patent: **09.12.2026**
(21) Application number: 25158547.7
(22) Date of filing: 18.02.2025
(51) Int. Cl.: B60Q 1/14, F21S 41/151, F21S 41/153, F21S 41/663

(54) **VEHICLE LAMP SYSTEM AND ACTIVE LIGHT ADJUSTMENT METHOD FOR A VEHICLE LAMP SYSTEM**
FAHRZEUGLAMPENSYSTEM UND AKTIVES LICHTEINSTELLUNGSVERFAHREN FÜR EIN FAHRZEUGLAMPENSYSTEM
SYSTÈME DE LAMPE DE VÉHICULE ET PROCÉDÉ DE RÉGLAGE DE LUMIÈRE ACTIVE POUR UN SYSTÈME DE LAMPE DE VÉHICULE

(30) Priority: 06.12.2024 TW 113147453
(43) Date of publication of application: 10.06.2026
(73) Proprietor: Wistron Corporation, New Taipei City 22181 (TW)
(72) Inventor: LIN, Hsiu Mei, New Taipei City 22181 (TW); CHEN, Chien Hua, 22181 New Taipei City (TW); HSU, Chin Hao, 22181 New Taipei City (TW); CHIU, Chih Hao, 22181 New Taipei City (TW); XIE, Zhu Xuan, 22181 New Taipei City (TW); LIN, Hsiao Chang, 22181 New Taipei City (TW); HUANG, Po Liang, 22181 New Taipei City (TW); JING, Ming Chiuan, 22181 New Taipei City (TW)
(74) Representative: Becker, Eberhard

(56) References cited:
- JP-A- 2003 331 616
- US-A1- 2018 354 406
- US-A1- 2019 128 497
- US-A1- 2020 353 858
- HELD MARCEL PHILIPP ET AL: "Efficient conceptual design for LED-based pixel light vehicle headlamps", PROCEEDINGS OF SPIE; [PROCEEDINGS OF SPIE ISSN 0277-786X VOLUME 10524], SPIE, US, vol. 10603, 1 December 2017 (2017-12-01), pages 1060315 - 1060315, XP060096476, ISBN: 978-1-5106-1533-5, DOI: 10.1117/12.2292741

## Description

### BACKGROUND

### Technical Field

The invention relates to a light source system and a light adjustment method for the light source system, and particularly relates to a vehicle lamp system and an active light adjustment method for the vehicle lamp system.

### Description of Related Art

Current LED vehicle lamps utilize densely arranged LED lamp beads and provide varying current levels to these LED lamp beads in different regions to generate distinct light patterns. However, the high current levels and compact spatial arrangement of the LEDs can lead to heat accumulation, necessitating the design of more complex heat dissipation systems to mitigate this issue.

In addition, the current vehicle lamp illumination algorithm for adaptive driving beam systems (ADBS) calculates the position of preceding vehicles and compares them with the field of view of the effective illumination range of each LED one by one. When a preceding vehicle enters the field of view of the effective illumination range of a specific LED, the LED is turned off. However, this method is overly complex, as it requires individual examination of the field of view of each LED to determine whether to turn off the light.

US 2018/354406 A1 relates to a lamp for a vehicle including a light generation unit with an array module having micro Light Emitting Diode (micro-LED) elements. US 2019/128497 A1 relates to an automotive adaptive driving beam headlamp including a housing, a digital camera integral with the ADB headlamp, an ADB controller, a segmented lighting array, and an ADB driver. US 2020/353858 A1 relates to a vehicle head light control apparatus which controls a lighting apparatus included in a headlight of a vehicle to avoid irradiating to an irradiation avoidance region which is a region overlaps with a detected object.

### SUMMARY

The invention is set out in the appended set of claims. The following description serves a better understanding of the present invention. The invention provides a vehicle lamp system with less severe heat accumulation, which may not require the use of a complex heat dissipation system.

The invention provides an active light adjustment method for a vehicle lamp system, and the method is simpler and less complex.

The vehicle lamp system includes a substrate and a plurality of light-emitting devices. The substrate has a first region, a second region, and a third region, where the first region corresponds to a direction of an oncoming vehicle, the second region and the third region correspond to a direction of a preceding vehicle in a same direction, and the second region is located above the third region. The light-emitting devices are disposed on the substrate and distributed in the first region, the second region, and the third region, where an interval between the light-emitting devices in the first region is greater than an interval between the light-emitting devices in the second region, and the interval between the light-emitting devices in the second region is greater than an interval between the light-emitting devices in the third region.

The active light adjustment method for a vehicle lamp system includes following steps. A vehicle lamp system is provided, where the vehicle lamp system includes a plurality of light-emitting devices and a sensor. At least one traffic object ahead is sensed by the sensor. Based on a sensing signal generated by the sensor, it is determined whether the at least one traffic object falls within shadow regions generated in response to at least one part of the light-emitting devices being turned off, and in response to determining that the at least one traffic object falls within the shadow regions generated in response to the at least one part of the light-emitting devices being turned off, a brightness of the at least one part of the light-emitting devices is reduced, or the at least one part of the light-emitting devices is turned off.

In the vehicle lamp system provided, the interval between the light-emitting devices in the first region is greater than the interval between the light-emitting devices in the second region, and the interval between the light-emitting devices in the second region is greater than the interval between the light-emitting devices in the third region. This design features a less dense arrangement of the light-emitting devices, resulting in less severe heat accumulation. Therefore, the vehicle lamp system provided in one or more embodiments of the invention may require no use of a complex heat dissipation system and thus may have a simpler structure and cost less. In the active light adjustment method for the vehicle lamp system provided in one or more embodiments of the invention, whether to reduce the brightness or turn off the light-emitting devices is determined by determining, based on the sensing signal generated by the sensor, whether the at least one traffic object falls within the shadow regions generated in response to at least one part of the light-emitting devices being turned off. Therefore, the active light adjustment method for the vehicle lamp system provided in one or more embodiments of the invention is simpler and less complex.

### BRIEF DESCRIPTION OF THE DRAWINGS

FIG. 1 is a schematic rear view of a substrate and light-emitting devices according to an embodiment of the invention.
FIG. 2 is a schematic top view illustrating the relationship between a vehicle equipped with a vehicle lamp system according to an embodiment of the invention and an oncoming vehicle.
FIG. 3 illustrates the relationship between shadow regions of the light-emitting devices in FIG. 1 and a traffic object ahead.
FIG. 4A to FIG. 4C illustrate the relationship between the shadow regions of the light-emitting devices in FIG. 1 according to another embodiment of the invention and positions of three types of traffic objects ahead.
FIG. 5 is a schematic view of the light-emitting devices and the shadow regions in FIG. 2.
FIG. 6A illustrates coordinates of a traffic object relative to the sensor in FIG. 2.
FIG. 6B illustrates coordinates of a traffic object relative to the light-emitting devices in FIG. 2.
FIG. 7 is a flowchart of an active light adjustment method for a vehicle lamp system according to an embodiment of the invention.
FIG. 8 and FIG. 9 are calibration flowcharts for the vehicle lamp system in FIG. 2.

### DESCRIPTION OF THE EMBODIMENTS

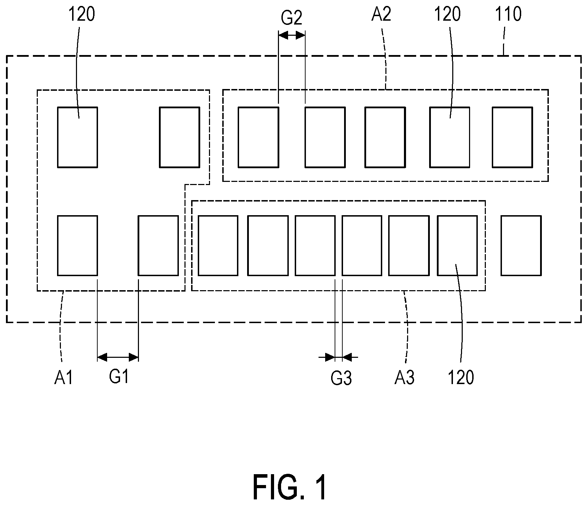

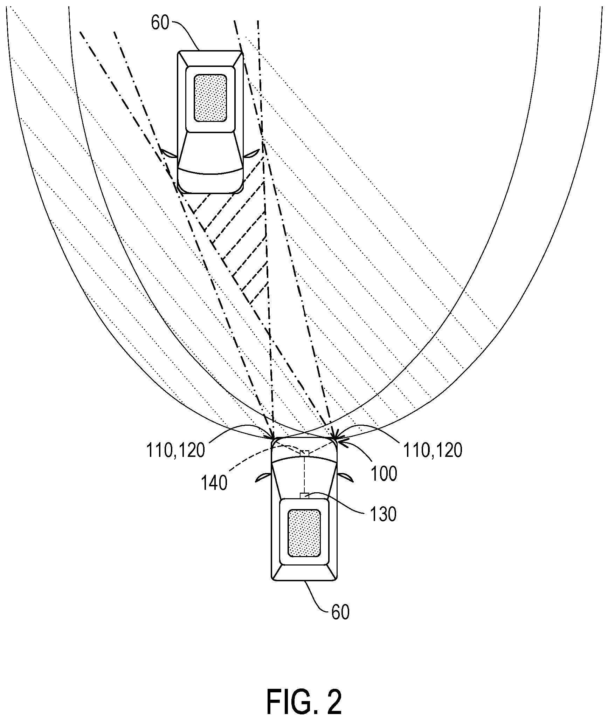

FIG. 1 is a schematic rear view of a substrate and light-emitting devices according to an embodiment of the invention, and FIG. 2 is a schematic top view illustrating the relationship between a vehicle equipped with a vehicle lamp system according to an embodiment of the invention and an oncoming vehicle. With reference to FIG. 1 and FIG. 2, a vehicle lamp system 100 provided in this embodiment includes a substrate 110 and a plurality of light-emitting devices 120, and the light-emitting devices 120 are disposed on the substrate 110. FIG. 1 is a rear view observed from the rear side of the substrate 110. Typically, the substrate 110 should cover the light-emitting devices 120; however, in order to clearly illustrate the positions of the light-emitting devices 120, the substrate 110 is specially depicted as a dashed line and rendered transparent, and the light emitted by the light-emitting devices 120 is directed toward the front (in a direction entering the plane of the figure). The substrate has a first region A1, a second region A2, and a third region A3, where the first region A1 corresponds to a direction of an oncoming vehicle 60. In countries where vehicles drive on the right side of the road, the first region A1 is located on the left side of the substrate 110, as illustrated in FIG. 1. Conversely, in countries where vehicles drive on the left side of the road, the first region A1 is located on the right side of the substrate 110. The second region A2 and the third region A3 correspond to a direction of the preceding vehicle in the same direction, and the second region A2 is located above the third region A3.

The light-emitting devices 120 are distributed in the first region A1, the second region A2, and the third region A3, where an interval G1 between the light-emitting devices 120 in the first region A1 is greater than an interval G2 between the light-emitting devices 120 in the second region A2, and the interval G2 between the light-emitting devices 120 in the second region A2 is greater than an interval G3 between the light-emitting devices 120 in the third region A3. This design is based on the principle that there is less need to project high-intensity light toward the oncoming vehicle 60, and the intensity of light illuminating the ground in front of the vehicle usually needs to be higher than the intensity of light illuminating the area above the front of the vehicle. Moreover, the arrangement of the light-emitting devices 120 in this design is less dense, which helps to reduce heat accumulation. Accordingly, the vehicle lamp system 100 provided in this embodiment need not adopt any complex heat dissipation system and thus can have a simpler structure and lower cost.

In this embodiment, the light-emitting devices 120 are, for instance, light-emitting diodes (LED), and the substrate 110 is, for instance, a circuit board, which should not be construed as a limitation.

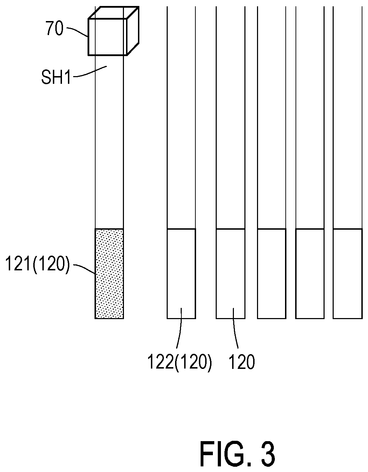

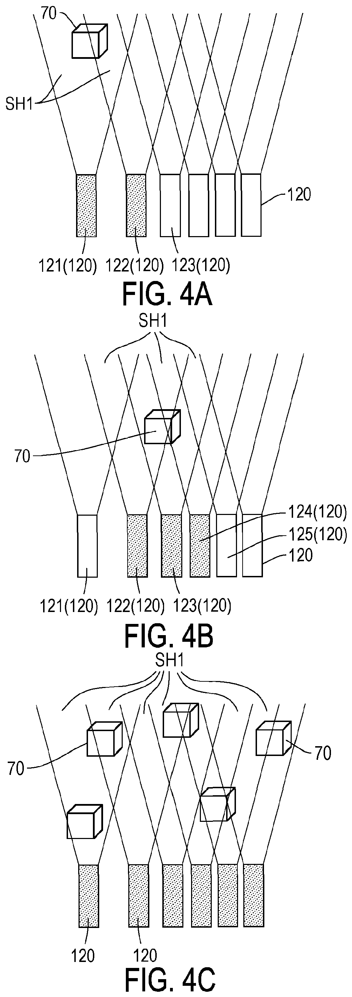

FIG. 3 illustrates the relationship between shadow regions of the light-emitting devices in FIG. 1 and a traffic object ahead, while FIG. 4A to FIG. 4C illustrate the relationship between the shadow regions of the light-emitting devices in FIG. 1 according to another embodiment of the invention and positions of three types of traffic objects ahead. With reference to FIG. 2, FIG. 3 and FIG. 4A to FIG. 4C, in this embodiment, the vehicle lamp system 100 further includes a sensor 130 and a controller 140. The sensor 130 is configured to sense at least one traffic object 70 in front of the vehicle. In this embodiment, the sensor 130 is, for instance, a camera. The controller 140 is electrically connected to the light-emitting devices 120 and the sensor 130 and configured to determine, based on a sensing signal transmitted from the sensor 130, whether the at least one traffic object 70 falls within shadow regions SH1 generated in response to at least one part of the light-emitting devices 120 being turned off, and the controller 140 is configured to reduce the brightness of the at least one part of the light-emitting devices 120 or turn off the at least one part of the light-emitting devices 120 in response to determining that the at least one traffic object 70 falls within the shadow regions SH1 generated in response to the at least one part of the light-emitting devices 120 being turned off. In other words, in response to determining by the controller 140 that the at least one traffic object 70 falls within the shadow regions SH1 generated in response to the at least one part of the light-emitting devices 120 being turned off, the controller 140 reduces the brightness of the at least one part of the light-emitting devices 120 or turns off the at least one part of the light-emitting devices 120.

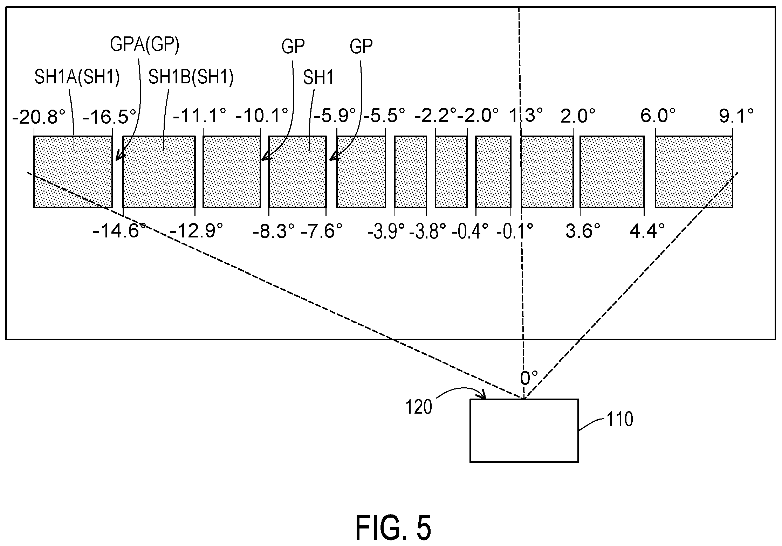

For instance, as illustrated in FIG. 3, when the field of view angle of the light-emitting devices 120 is relatively narrow, the illumination regions of the light-emitting devices 120 do not partially overlap, resulting in the intersection of the shadow regions SH1 generated in response to the light-emitting devices 120 being turned off (i.e., the shadow regions SH1 partially overlap). In response to detecting by the sensor 130 that the traffic object 70 falls within the shadow region SH1 corresponding to the light-emitting device 121, the controller 140 reduces the brightness of the light-emitting device 121 or turn off the light-emitting device 121 to avoid affecting the driver of the traffic object 70 (e.g., an oncoming vehicle) with overly bright illumination. As illustrated in FIG. 4A to FIG. 4C, when the field of view angle of the light-emitting devices 120 is relatively wide, the illumination regions of the light-emitting devices 120 intersect (i.e., partially overlap), causing discontinuities in the shadow regions SH1 generated in response to the light-emitting devices 120 being turned off (as shown in FIG. 5). Moreover, as illustrated in FIG. 4A, the traffic object 70 simultaneously falls within the shadow regions SH1 corresponding to both of the light-emitting devices 121 and 122, and thus the controller 140 reduces the brightness of both of the light-emitting devices 121 and 122 or turns off both of the light-emitting devices 121 and 122. Similarly, in FIG. 4B, the controller 140 should reduce the brightness of the light-emitting devices 122, 123, and 124 or turn off the light-emitting devices 122, 123, and 124. In FIG. 4C, because the traffic objects 70 are distributed into all of the shadow regions SH1 of all of the light-emitting devices 120, the controller 140 reduces the brightness of all of the light-emitting devices 120 or turns off all of the light-emitting devices 120.

In one embodiment of the invention, in response to determining that the traffic object 70 falls within the shadow regions SH1 generated in response to at least one part of the light-emitting devices 120 being turned off, the controller 140 is further configured to reduce the brightness of at least one adjacent light-emitting device 120 or turn off at least one adjacent light-emitting device 120, where the at least one adjacent light-emitting device 120 is adjacent to the at least one part of the light-emitting devices 120. For instance, in the exemplary embodiment depicted in FIG. 3, the controller 140 can further reduce the brightness of the adjacent light-emitting device 122 or turn off the adjacent light-emitting device 122. In the exemplary embodiment depicted in FIG. 4A, the controller 140 can further reduce the brightness of the adjacent light-emitting device 123 or turn off the adjacent light-emitting device 123. In the exemplary embodiment depicted in FIG. 4B, the controller 140 can further reduce the brightness of the adjacent light-emitting devices 121 and 125 or turn off the adjacent light-emitting devices 121 and 125.

FIG. 5 is a schematic view of the light-emitting devices and the shadow regions in FIG. 2. With reference to FIG. 1, FIG. 2 and FIG. 5, the controller 140 is configured to determine, based on the sensing signal transmitted from the sensor 130, whether the traffic object 70 falls within a gap GP between the shadow regions SH1 generated in response to at least one part of the light-emitting devices 120 being turned off, and the controller 140 is configured to, in response to determining that the traffic object 70 falls within the gap GP between the shadow regions SH1 generated in response to at least one part of the light-emitting devices 120 being turned off, reduce the brightness of the at least one part of the light-emitting devices 120 corresponding to the shadow regions SH1 on both sides of the gap GP or turn off the at least one part of the light-emitting devices 120 corresponding to the shadow regions SH1 on both sides of the gap GP. For instance, in FIG. 5, the shadow regions SH1 are discontinuous, and the gaps GP exist between adjacent shadow regions SH1. In response to the traffic object 70 falling within the gap GPA in FIG. 5, the controller 140 may reduce the brightness of two light-emitting devices 120 corresponding to the shadow region SH1A and the shadow region SH1B on both sides of the gap GPA.

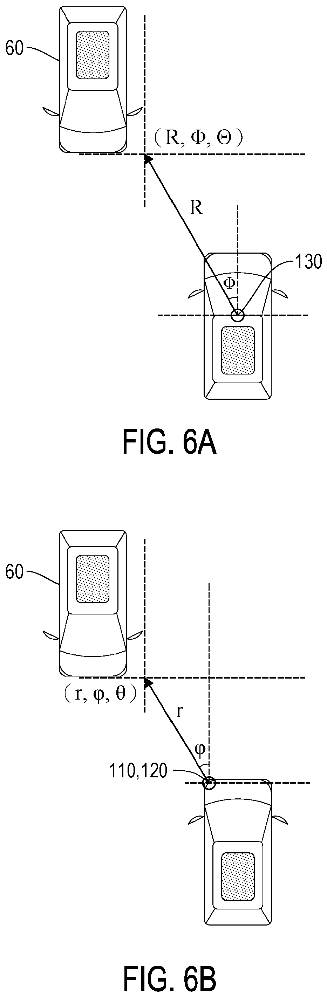

FIG. 6A illustrates coordinates of a traffic object relative to the sensor in FIG. 2, while FIG. 6B illustrates coordinates of a traffic object relative to the light-emitting devices in FIG. 2. With reference to FIG. 2, FIG. 6A and FIG. 6B, the controller 140 is configured to convert coordinates (R, Φ, Θ) of a traffic object (an oncoming vehicle 60 acting as an example in FIG. 6A and FIG. 6B) measured by the sensor 130 into coordinates (r, φ, 0) of a traffic object relative to the light-emitting devices 120, and the controller 140 further determines whether the traffic object falls within the shadow regions SH1 generated in response to at least one part of the light-emitting devices 120 being turned off.

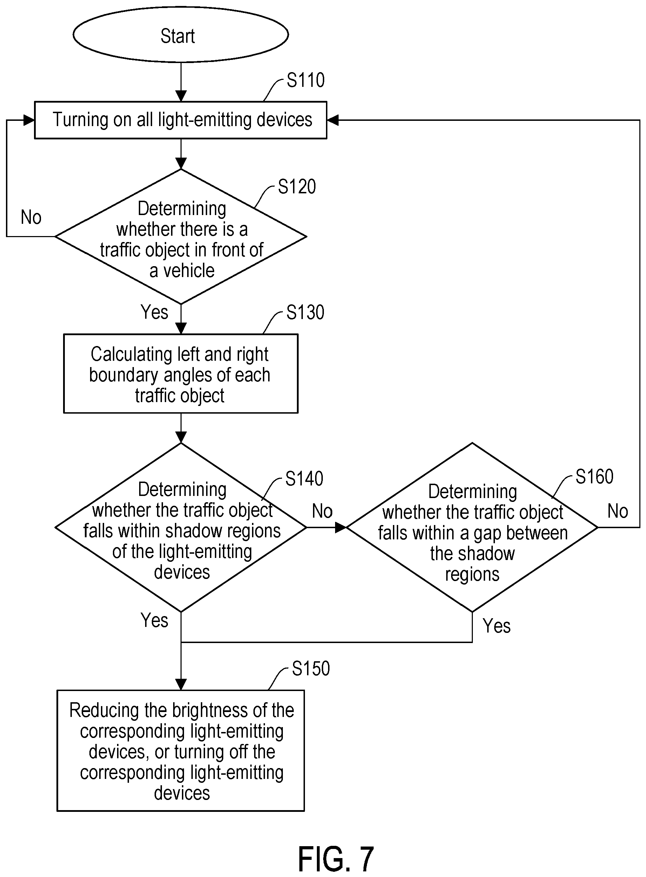

FIG. 7 is a flowchart of an active light adjustment method for a vehicle lamp system according to an embodiment of the invention. With reference to FIG. 1, FIG. 2, and FIG. 7, the active light adjustment method for a vehicle lamp system provided in this embodiment may be executed by applying the vehicle lamp system 100 depicted in FIG. 1 and FIG. 2 and includes a step of providing the vehicle lamp system 100 and the method executed by the aforementioned controller 140.

In the active light adjustment method for the vehicle lamp system as provided in this embodiment of the invention, whether to reduce the brightness of the light-emitting devices 120 or turn off the light-emitting devices 120 is determined by determining, based on the sensing signal generated by the sensor 130, whether the traffic object 70 falls within the shadow regions SH1 generated in response to at least one part of the light-emitting devices 120 being turned off. As a result, the active light adjustment method for the vehicle lamp system provided in this embodiment is relatively simple and uncomplicated.

For instance, first, step S110 is performed, in which the controller 130 turns on all the light-emitting devices 120. Next, step S120 is performed, where the controller 130 determines whether there is a traffic object 70 in front of the vehicle based on the sensing signal generated by the sensor 1300. If the answer is "no", the process returns to step S110; if the answer is "yes", the process continues to execute step S130.

In step S130, the controller 130 calculates the left and right boundary angles of each traffic object 70. Then, step S140 is performed to determine whether the traffic object 70 falls within the shadow regions SH1 of the light-emitting devices 120. If the answer is "yes", the process continues to execute step S150, in which the brightness of the corresponding light-emitting devices 120 is reduced, or the corresponding light-emitting devices 120 are turned off. If the determination result of step S140 is "no", step S160 is executed to determine whether the traffic object 70 falls within the gap GP between the shadow regions SH1. If the answer is "yes", the process continues to execute step S150, where the corresponding light-emitting devices 120 refer to the light-emitting devices 120 corresponding to the shadow regions SH1 on both sides of the gap GP. If the determination result of step S160 is "no", the process returns to step S110.

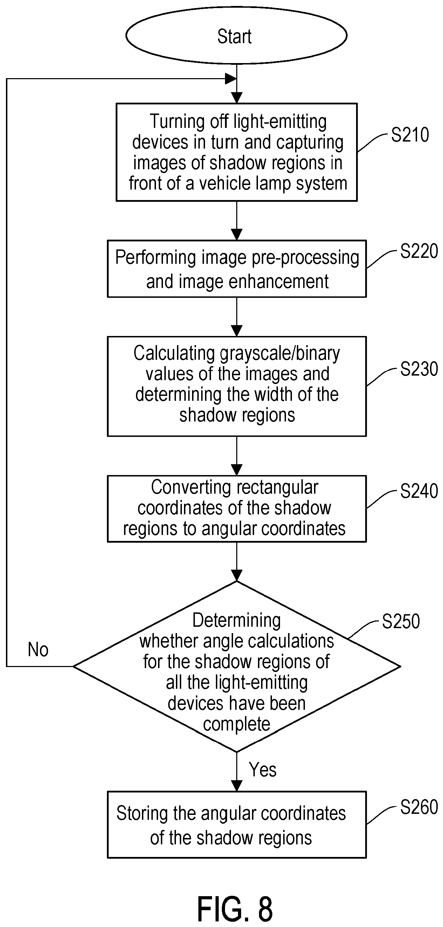

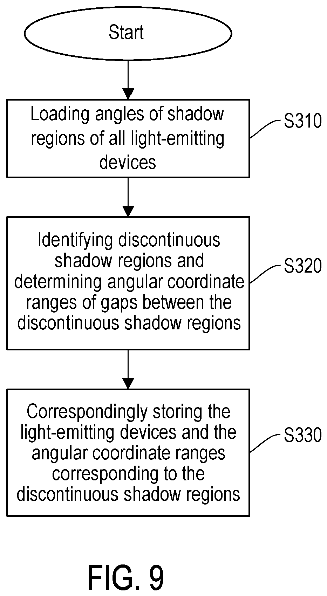

FIG. 8 and FIG. 9 are calibration flowcharts for the vehicle lamp system in FIG. 2. The vehicle lamp system 100 provided in this embodiment can be calibrated according to the flowcharts in FIG. 8 and FIG. 9 before leaving the factory or before use. With reference to FIG. 1, FIG. 2, and FIG. 8, step S210 is performed, in which the light-emitting devices 120 are turned off in turn, and images of the shadow regions SH1 in front of the vehicle lamp system 100 are captured. Subsequently, step S220 is executed, where image pre-processing and image enhancement are performed on the captured images, such as adjusting white balance or brightness compensation. Then, step S230 is executed, where color images are converted to grayscale images (i.e., gray images), then the grayscale images are further binarized, and the binarized images are utilized to determine the width of the shadow regions SH1. Next, step S240 is executed, where rectangular coordinates of the shadow regions SH1 are converted to angular coordinates. Then, step S250 is executed to determine whether the angle calculations for the shadow regions SH1 of all light-emitting devices 120 have been completed. If the answer is "yes", the process continues to execute step S260, which is to store the angular coordinates of the shadow regions SH1 corresponding to the light-emitting devices 120 (e.g., storing the angular coordinates in a memory electrically connected to the controller 140), so as to allow the controller 140 to determine during subsequent use whether the traffic object 70 falls within the shadow regions SH1 generated in response to at least one part of the light-emitting devices 120 being turned off. If the determination result of step S250 is "no", the process returns to step S210 to turn off the next light-emitting device 120 or the next group of light-emitting devices 120.

With further reference to FIG. 1, FIG. 2, and FIG. 9, step S310 can be further executed load the angles of the shadow regions SH1 of all light-emitting devices 120. Then, step S320 is executed to identify discontinuous shadow regions SH1 and determine the angular coordinate ranges of the gaps GP between the discontinuous shadow regions SH1. Next, step S330 is executed to correspondingly store the light-emitting devices 120 and the angular coordinate ranges corresponding to the discontinuous shadow regions SH1, so as to determine whether the traffic object 70 falls within the gaps GP between the shadow regions SH1 generated in response to at least one part of the light-emitting devices 120 being turned off.

In an embodiment of the invention, the controller 140 is, for instance, a central processing unit (CPU), a microprocessor, a digital signal processor (DSP), a programmable controller, a programmable logic device (PLD), any other similar device, or a combination of these devices, which should not be construed as a limitation. Besides, in an embodiment of the invention, the various functions of the controller 140 can be implemented in form of a plurality of codes. These codes can be stored in a memory and executed by the controller 140. Alternatively, in an embodiment of the invention, the various functions of the controller 140 can be implemented in form of one or more circuits. Whether the various functions of the controller 140 are implemented in form of software or hardware should not be construed as a limitation

## Claims

1. A vehicle lamp system (100), comprising:
a substrate (110), having a first region (A1), a second region (A2), and a third region (A3), wherein the first region (A1) corresponds to a direction of an oncoming vehicle (60), the second region (A2) and the third region (A3) correspond to a direction of a preceding vehicle in a same direction, and the second region (A2) is located above the third region (A3); and
a plurality of light-emitting devices (120), disposed on the substrate (110) and distributed in the first region (A1), the second region (A2), and the third region (A3), wherein an interval (G1) between the light-emitting devices (120) in the first region (A1) is greater than an interval (G2) between the light-emitting devices (120) in the second region (A2), and the interval (G2) between the light-emitting devices (120) in the second region (A2) is greater than an interval (G3) between the light-emitting devices (120) in the third region (A3);
a sensor (130), configured to sense at least one traffic object (70) ahead; and **characterized by**
a controller (140), electrically connected to the light-emitting devices (120) and the sensor (130), configured to determine, based on a sensing signal transmitted from the sensor (130), whether the at least one traffic object (70) falls within a gap (GP) between shadow regions (SH1) generated in response to at least one part of the light-emitting devices (120) being turned off, and configured to reduce a brightness of the at least one part of the light-emitting devices (120) corresponding to the shadow regions (SH1) on both sides of the gap (GP) or turn off the at least one part of the light-emitting devices (120) corresponding to the shadow regions (SH1) on both sides of the gap (GP) in response to determining that the at least one traffic object (70) falls within the gap (GP) between the shadow regions (SH1) generated in response to the at least one part of the light-emitting devices (120) being turned off.

2. The vehicle lamp system (100) according to claim 1, wherein
the controller (140)is configured to determine, based on the sensing signal transmitted from the sensor (130), whether the at least one traffic object (70) falls within the shadow regions (SH1) generated in response to at least one part of the light-emitting devices (120) being turned off, and configured to reduce a brightness of the at least one part of the light-emitting devices (120) or turn off the at least one part of the light-emitting devices (120) in response to determining that the traffic object (70) falls within the shadow regions (SH1) generated in response to the at least one part of the light-emitting devices (120) being turned off.

3. The vehicle lamp system (100) according to claim 2, wherein the controller (140) is further configured to reduce a brightness of at least one adjacent light-emitting device (120) of the light-emitting devices (120) or turn off the at least one adjacent light-emitting device (120) in response to determining that the traffic object (70) falls within the shadow regions (SH1) generated in response to the at least one part of the light-emitting devices (120) being turned off, wherein the at least one adjacent light-emitting device (120) is adjacent to the at least one part of the light-emitting devices (120).

4. The vehicle lamp system (100) according to claim 1, wherein the controller (140) is configured to convert a coordinate of the at least one traffic object (70) measured by the sensor (130) into a coordinate of the at least one traffic object (70) relative to the light-emitting devices (120) and further determine whether the at least one traffic object (70) falls within shadow regions (SH1) generated in response to at least one part of the light-emitting devices (120) being turned off.

5. An active light adjustment method for a vehicle lamp system (100), comprising:
providing a vehicle lamp system (100), wherein the vehicle lamp system (100) comprises a plurality of light-emitting devices (120) and a sensor (130);
sensing at least one traffic object (70) ahead by the sensor (130); and
the active light adjustment method **characterized by** further comprising:
based on a sensing signal transmitted from the sensor (130), determining whether the at least one traffic object (70) falls within shadow regions (SH1) generated in response to at least one part of the light-emitting devices (120) being turned off, and reducing a brightness of the at least one part of the light-emitting devices (120) or turning off the at least one part of the light-emitting devices (120) in response to determining that the at least one traffic object (70) falls within the shadow regions (SH1) generated in response to the at least one part of the light-emitting devices (120) being turned off; and
based on the sensing signal transmitted from the sensor (130), determining whether the at least one traffic object (70) falls within a gap (GP) between the shadow regions (SH1) generated in response to the at least one part of the light-emitting devices (120) being turned off, and reducing the brightness of the at least one part of the light-emitting devices (120) corresponding to the shadow regions (SH1) on both sides of the gap (GP) or turning off the at least one part of the light-emitting devices (120) corresponding to the shadow regions (SH1) on both sides of the gap (GP) in response to determining that the at least one traffic object (70) falls within the gap (GP) between the shadow regions (SH1) generated in response to the at least one part of the light-emitting devices (120) being turned off.

6. The active light adjustment method according to claim 5, further comprising:
reducing a brightness of at least one adjacent light-emitting device (120) of the light-emitting devices (120) or turning off the at least one adjacent light-emitting device (120) in response to determining that the at least one traffic object (70) falls within the shadow regions (SH1) generated in response to the at least one part of the light-emitting devices (120) being turned off, wherein the at least one adjacent light-emitting device (120) is adjacent to the at least one part of the light-emitting devices (120).

7. The active light adjustment method according to claim 5, further comprising:
converting a coordinate of the at least one traffic object (70) measured by the sensor (130) into a coordinate of the at least one traffic object (70) relative to the light-emitting devices (120) and further determining whether the at least one traffic object (70) falls within the shadow regions (SH1) generated in response to the at least one part of the light-emitting devices (120) being turned off.

8. The active light adjustment method according to claim 5, further comprising:
alternately turning off the light-emitting devices (120), and capturing images of the shadow regions (SH1) in front of the vehicle lamp system (100);
converting rectangular coordinates of the shadow regions (SH1) into angular coordinates; and
storing a plurality of the angular coordinates of a plurality of the shadow regions (SH1) corresponding to the light-emitting devices (120) to determine whether the at least one traffic object (70) falls within the shadow regions (SH1) generated in response to the at least one part of the light-emitting devices (120) being turned off.

9. The active light adjustment method according to claim 8, further comprising:
identifying the shadow regions (SH1) that are discontinuous;
identifying an angular coordinate range of the gap (GP) between the discontinuous shadow regions (SH1); and
correspondingly storing the light-emitting devices (120) corresponding to the discontinuous shadow regions (SH1) and the angular coordinate range to determine whether the at least one traffic object (70) falls within the gap (GP) between the shadow regions (SH1) generated in response to the at least one part of the light-emitting devices (120) being turned off.

## Patentansprüche

1. Fahrzeugbeleuchtungssystem (100), umfassend:
ein Substrat (110), aufweisend eine erste Region (A1), eine zweite Region (A2) und eine dritte Region (A3), wobei die erste Region (A1) einer Fahrtrichtung eines entgegenkommenden Fahrzeugs (60) entspricht, die zweite Region (A2) und die dritte Region (A3) einer Fahrtrichtung eines vorausfahrenden Fahrzeugs in derselben Richtung entsprechen und die zweite Region (A2) oberhalb der dritten Region (A3) angeordnet ist;
und
eine Vielzahl von lichtemittierenden Vorrichtungen (120), die auf dem Substrat (110) angeordnet und in der ersten Region (A1), der zweiten Region (A2) und der dritten Region (A3) verteilt sind, wobei ein Abstand (G1) zwischen den lichtemittierenden Vorrichtungen (120) in der ersten Region (A1) größer ist als ein Abstand (G2) zwischen den lichtemittierenden Vorrichtungen (120) in der zweiten Region (A2), und wobei der Abstand (G2) zwischen den lichtemittierenden Vorrichtungen (120) in der zweiten Region (A2) größer ist als ein Abstand (G3) zwischen den lichtemittierenden Vorrichtungen (120) in der dritten Region (A3);
einen Sensor (130), der dazu konfiguriert ist, mindestens ein vorausfahrendes Verkehrsobjekt (70) zu erfassen; und **gekennzeichnet ist durch**
eine Steuereinheit (140), die elektrisch mit den lichtemittierenden Vorrichtungen (120) und dem Sensor (130) verbunden und dazu konfiguriert ist, auf der Grundlage eines von dem Sensor (130) übertragenen Erfassungssignals zu bestimmen, ob das mindestens eine Verkehrsobjekt (70) in eine Lücke (GP) zwischen Schattenregionen (SH1) fällt, die als Reaktion auf das Ausschalten mindestens eines Teils der lichtemittierenden Vorrichtungen (120) erzeugt werden, und die Helligkeit des mindestens einen Teils der lichtemittierenden Vorrichtungen (120), der den Schattenregionen (SH1) auf beiden Seiten der Lücke (GP) entspricht, zu verringern oder den mindestens einen Teil der lichtemittierenden Vorrichtungen (120), der den Schattenregionen (SH1) auf beiden Seiten der Lücke (GP) entspricht, auszuschalten, als Reaktion auf die Bestimmung, dass das mindestens eine Verkehrsobjekt (70) in die Lücke (GP) zwischen den Schattenregionen (SH1) fällt, die als Reaktion auf das Ausschalten des mindestens einen Teils der lichtemittierenden Vorrichtungen (120) erzeugt werden.

2. Fahrzeugbeleuchtungssystem (100) nach Anspruch 1, wobei
die Steuereinheit (140) dazu konfiguriert ist, auf der Grundlage des von dem Sensor (130) übertragenen Erfassungssignals zu bestimmen, ob das mindestens eine Verkehrsobjekt (70) in die Schattenregionen (SH1) fällt, die als Reaktion auf das Ausschalten mindestens eines Teils der lichtemittierenden Vorrichtungen (120) erzeugt werden, und die Helligkeit des mindestens einen Teils der lichtemittierenden Vorrichtungen (120) zu verringern oder den mindestens einen Teil der lichtemittierenden Vorrichtungen (120) auszuschalten, als Reaktion auf die Bestimmung, dass das Verkehrsobjekt (70) in die Schattenregionen (SH1) fällt, die als Reaktion auf das Ausschalten des mindestens einen Teils der lichtemittierenden Vorrichtungen (120) erzeugt werden.

3. Fahrzeugbeleuchtungssystem (100) nach Anspruch 2, wobei die Steuereinheit (140) ferner dazu konfiguriert ist, die Helligkeit mindestens einer benachbarten lichtemittierenden Vorrichtung (120) der lichtemittierenden Vorrichtungen (120) zu verringern oder die mindestens eine benachbarte lichtemittierende Vorrichtung (120) auszuschalten, als Reaktion auf die Bestimmung, dass das Verkehrsobjekt (70) in die Schattenregionen (SH1) fällt, die als Reaktion auf das Ausschalten des mindestens einen Teils der lichtemittierenden Vorrichtungen (120) erzeugt werden, wobei die mindestens eine benachbarte lichtemittierende Vorrichtung (120) an den mindestens einen Teil der lichtemittierenden Vorrichtungen (120) angrenzt.

4. Fahrzeugbeleuchtungssystem (100) nach Anspruch 1, wobei die Steuereinheit (140) dazu konfiguriert ist, um eine von dem Sensor (130) gemessene Koordinate des mindestens einen Verkehrsobjekts (70) in eine Koordinate des mindestens einen Verkehrsobjekts (70) relativ zu den lichtemittierenden Vorrichtungen (120) umzuwandeln und ferner zu bestimmen, ob das mindestens eine Verkehrsobjekt (70) in Schattenregionen (SH1) fällt, die als Reaktion auf das Ausschalten mindestens eines Teils der lichtemittierenden Vorrichtungen (120) erzeugt werden.

5. Aktives Lichtanpassungsverfahren für ein Fahrzeugbeleuchtungssystem (100), umfassend:
Bereitstellen eines Fahrzeugbeleuchtungssystems (100), wobei das Fahrzeugbeleuchtungssystem (100) eine Vielzahl von lichtemittierenden Vorrichtungen (120) und einen Sensor (130) umfasst;
Erfassen mindestens eines vorausfahrenden Verkehrsobjekts (70) durch den Sensor (130); und
**dadurch gekennzeichnet, dass** das aktive Lichtanpassungsverfahren ferner umfasst:
Bestimmen, auf der Grundlage eines von dem Sensor (130) übertragenen Erfassungssignals, ob das mindestens eine Verkehrsobjekt (70) in Schattenregionen (SH1) fällt, die als Reaktion auf das Ausschalten mindestens eines Teils der lichtemittierenden Vorrichtungen (120) erzeugt werden, und Verringern einer Helligkeit des mindestens einen Teils der lichtemittierenden Vorrichtungen (120) oder Ausschalten des mindestens einen Teils der lichtemittierenden Vorrichtungen (120), als Reaktion auf die Bestimmung, dass das mindestens eine Verkehrsobjekt (70) in die Schattenregionen (SH1) fällt, die als Reaktion auf das Ausschalten des mindestens einen Teils der lichtemittierenden Vorrichtungen (120) erzeugt werden; und
Bestimmen, auf der Grundlage des von dem Sensor (130) übertragenen Erfassungssignals, ob das mindestens eine Verkehrsobjekt (70) in eine Lücke (GP) zwischen den Schattenregionen (SH1) fällt, die als Reaktion auf das Ausschalten des mindestens einen Teils der lichtemittierenden Vorrichtungen (120) erzeugt werden, und Verringern der Helligkeit des mindestens einen Teils der lichtemittierenden Vorrichtungen (120), der den Schattenregionen (SH1) auf beiden Seiten der Lücke (GP) entspricht, oder Ausschalten des mindestens einen Teils der lichtemittierenden Vorrichtungen (120), der den Schattenregionen (SH1) auf beiden Seiten der Lücke (GP) entspricht, als Reaktion auf die Bestimmung, dass das mindestens eine Verkehrsobjekt (70) in die Lücke (GP) zwischen den Schattenregionen (SH1) fällt, die als Reaktion auf das Ausschalten des mindestens einen Teils der lichtemittierenden Vorrichtungen (120) erzeugt werden.

6. Aktives Lichtanpassungsverfahren nach Anspruch 5, ferner umfassend:
Verringern einer Helligkeit mindestens einer benachbarten lichtemittierenden Vorrichtung (120) der lichtemittierenden Vorrichtungen (120) oder Ausschalten der mindestens einen benachbarten lichtemittierenden Vorrichtung (120), als Reaktion auf die Bestimmung, dass das mindestens eine Verkehrsobjekt (70) in die Schattenregionen (SH1) fällt, die als Reaktion auf das Ausschalten des mindestens einen Teils der lichtemittierenden Vorrichtungen (120) erzeugt werden, wobei die mindestens eine benachbarte lichtemittierende Vorrichtung (120) an den mindestens einen Teil der lichtemittierenden Vorrichtungen (120) angrenzt.

7. Aktives Lichtanpassungsverfahren nach Anspruch 5, ferner umfassend:
Umwandeln einer von dem Sensor (130) gemessenen Koordinate des mindestens einen Verkehrsobjekts (70) in eine Koordinate des mindestens einen Verkehrsobjekts (70) relativ zu den lichtemittierenden Vorrichtungen (120) und ferner Bestimmen, ob das mindestens eine Verkehrsobjekt (70) in die Schattenregionen (SH1) fällt, die als Reaktion auf das Ausschalten des mindestens einen Teils der lichtemittierenden Vorrichtungen (120) erzeugt werden.

8. Aktives Lichtanpassungsverfahren nach Anspruch 5, ferner umfassend:
abwechselndes Ausschalten der lichtemittierenden Vorrichtungen (120) und Aufnehmen von Bildern der Schattenregionen (SH1) vor dem Fahrzeugbeleuchtungssystem (100);
Umwandeln von rechtwinkligen Koordinaten der Schattenregionen (SH1) in Winkelkoordinaten; und
Speichern einer Vielzahl der Winkelkoordinaten einer Vielzahl der Schattenregionen (SH1), die den lichtemittierenden Vorrichtungen (120) entsprechen, um zu bestimmen, ob das mindestens eine Verkehrsobjekt (70) in die Schattenregionen (SH1) fällt, die als Reaktion auf das Ausschalten mindestens eines Teils der lichtemittierenden Vorrichtungen (120) erzeugt werden.

9. Aktives Lichtanpassungsverfahren nach Anspruch 8, ferner umfassend:
Identifizieren der Schattenregionen (SH1), die diskontinuierlich sind;
Identifizieren eines Winkelkoordinatenbereichs der Lücke (GP) zwischen den diskontinuierlichen Schattenregionen (SH1); und
entsprechendes Speichern der lichtemittierenden Vorrichtungen (120), die den diskontinuierlichen Schattenregionen (SH1) entsprechen, sowie des Winkelkoordinatenbereichs, um zu bestimmen, ob das mindestens eine Verkehrsobjekt (70) in die Lücke (GP) zwischen den Schattenregionen (SH1) fällt, die als Reaktion auf das Ausschalten mindestens eines Teils der lichtemittierenden Vorrichtungen (120) erzeugt werden.

## Revendications

1. Système d'éclairage pour véhicule (100), comprenant :
un substrat (110) comportant une première région (A1), une deuxième région (A2) et une
troisième région (A3), la première région (A1) correspondant à une direction de déplacement d'un véhicule venant en sens inverse (60), la deuxième région (A2) et la troisième région (A3) correspondant à une direction de déplacement d'un véhicule précédent circulant dans la même direction, et la deuxième région (A2) étant disposée au-dessus de la troisième région (A3) ; et
une pluralité de dispositifs électroluminescents (120) disposés sur le substrat (110) et répartis dans la première région (A1), la deuxième région (A2) et la troisième région (A3), un intervalle (G1) entre les dispositifs électroluminescents (120) dans la première région (A1) étant supérieur à un intervalle (G2) entre les dispositifs électroluminescents (120) dans la deuxième région (A2), et l'intervalle (G2) entre les dispositifs électroluminescents (120) dans la deuxième région (A2) étant supérieur à un intervalle (G3) entre les dispositifs électroluminescents (120) dans la troisième région (A3) ;
un capteur (130) configuré pour détecter au moins un objet routier (70) situé à l'avant ;
**caractérisé en ce qu'**il comprend :
une unité de commande (140) reliée électriquement aux dispositifs électroluminescents (120) et au capteur (130), et configurée pour déterminer, sur la base d'un signal de détection transmis par le capteur (130), si ledit au moins un objet routier (70) se trouve dans un intervalle (GP) entre les zones d'ombre (SH1) générées en réponse à la désactivation d'au moins une partie des dispositifs électroluminescents (120), et pour réduire la luminosité de ladite au moins une partie des dispositifs électroluminescents (120) correspondant aux zones d'ombre (SH1) de part et d'autre de l'intervalle (GP), ou désactiver ladite au moins une partie des dispositifs électroluminescents (120) correspondant aux zones d'ombre (SH1) de part et d'autre de l'intervalle (GP), en réponse à la détermination selon laquelle ledit au moins un objet routier (70) se trouve dans l'intervalle (GP) entre les zones d'ombre (SH1) générées en réponse à la désactivation de ladite au moins une partie des dispositifs électroluminescents (120).

2. Système d'éclairage pour véhicule (100) selon la revendication 1, dans lequel l'unité de commande (140) est configurée pour déterminer, sur la base du signal de détection transmis par le capteur (130), si ledit au moins un objet routier (70) se trouve dans les zones d'ombre (SH1) générées en réponse à la désactivation d'au moins une partie des dispositifs électroluminescents (120), et pour réduire la luminosité de ladite au moins une partie des dispositifs électroluminescents (120) ou désactiver ladite au moins une partie des dispositifs électroluminescents (120), en réponse à la détermination selon laquelle l'objet routier (70) se trouve dans les zones d'ombre (SH1) générées en réponse à la désactivation de ladite au moins une partie des dispositifs électroluminescents (120).

3. Système d'éclairage pour véhicule (100) selon la revendication 2, dans lequel l'unité de commande (140) est en outre configurée pour réduire la luminosité d'au moins un dispositif électroluminescent adjacent (120) parmi les dispositifs électroluminescents (120) ou désactiver ledit au moins un dispositif électroluminescent adjacent (120), en réponse à la détermination selon laquelle l'objet routier (70) se trouve dans les zones d'ombre (SH1) générées en réponse à la désactivation de ladite au moins une partie des dispositifs électroluminescents (120), ledit au moins un dispositif électroluminescent adjacent (120) étant adjacent à ladite au moins une partie des dispositifs électroluminescents (120).

4. Système d'éclairage pour véhicule (100) selon la revendication 1, dans lequel l'unité de commande (140) est configurée pour convertir une coordonnée dudit au moins un objet routier (70) mesurée par le capteur (130) en une coordonnée dudit au moins un objet routier (70) par rapport aux dispositifs électroluminescents (120), et pour déterminer en outre si ledit au moins un objet routier (70) se trouve dans des zones d'ombre (SH1) générées en réponse à la désactivation d'au moins une partie des dispositifs électroluminescents (120).

5. Procédé d'adaptation active de l'éclairage pour un système d'éclairage pour véhicule (100), comprenant :
la mise à disposition d'un système d'éclairage pour véhicule (100), le système d'éclairage pour véhicule (100) comprenant une pluralité de dispositifs électroluminescents (120) et un capteur (130) ;
la détection d'au moins un objet routier (70) situé à l'avant par le capteur (130) ;
**caractérisé en ce que** le procédé d'adaptation active de l'éclairage comprend en outre :
la détermination, sur la base d'un signal de détection transmis par le capteur (130), visant à établir si ledit au moins un objet routier (70) se trouve dans des zones d'ombre (SH1) générées en réponse à la désactivation d'au moins une partie des dispositifs électroluminescents (120), et la réduction de la luminosité de ladite au moins une partie des dispositifs électroluminescents (120) ou la désactivation de ladite au moins une partie des dispositifs électroluminescents (120), en réponse à la détermination selon laquelle ledit au moins un objet routier (70) se trouve dans les zones d'ombre (SH1) générées en réponse à la désactivation de ladite au moins une partie des dispositifs électroluminescents (120) ; et
la détermination, sur la base du signal de détection transmis par le capteur (130), visant à établir si ledit au moins un objet routier (70) se trouve dans un intervalle (GP) entre les zones d'ombre (SH1) générées en réponse à la désactivation de ladite au moins une partie des dispositifs électroluminescents (120), et la réduction de la luminosité de ladite au moins une partie des dispositifs électroluminescents (120) correspondant aux zones d'ombre (SH1) de part et d'autre de l'intervalle (GP), ou la désactivation de ladite au moins une partie des dispositifs électroluminescents (120) correspondant aux zones d'ombre (SH1) de part et d'autre de l'intervalle (GP), en réponse à la détermination selon laquelle ledit au moins un objet routier (70) se trouve dans l'intervalle (GP) entre les zones d'ombre (SH1) générées en réponse à la désactivation de ladite au moins une partie des dispositifs électroluminescents (120).

6. Procédé d'adaptation active de l'éclairage selon la revendication 5, comprenant en outre :
la réduction de la luminosité d'au moins un dispositif électroluminescent adjacent (120) parmi les dispositifs électroluminescents (120) ou la désactivation dudit au moins un dispositif électroluminescent adjacent (120), en réponse à la détermination selon laquelle ledit au moins un objet routier (70) se trouve dans les zones d'ombre (SH1) générées en réponse à la désactivation de ladite au moins une partie des dispositifs électroluminescents (120), ledit au moins un dispositif électroluminescent adjacent (120) étant adjacent à ladite au moins une partie des dispositifs électroluminescents (120).

7. Procédé d'adaptation active de l'éclairage selon la revendication 5, comprenant en outre :
la conversion d'une coordonnée dudit au moins un objet routier (70) mesurée par le capteur (130) en une coordonnée dudit au moins un objet routier (70) par rapport aux dispositifs électroluminescents (120), et la détermination supplémentaire visant à établir si ledit au moins un objet routier (70) se trouve dans les zones d'ombre (SH1) générées en réponse à la désactivation de ladite au moins une partie des dispositifs électroluminescents (120).

8. Procédé d'adaptation active de l'éclairage selon la revendication 5, comprenant en outre :
la désactivation alternée des dispositifs électroluminescents (120) et la capture d'images des zones d'ombre (SH1) devant le système d'éclairage pour véhicule (100) ;
la conversion de coordonnées rectangulaires des zones d'ombre (SH1) en coordonnées angulaires ; et
le stockage d'une pluralité de coordonnées angulaires d'une pluralité de zones d'ombre (SH1) correspondant aux dispositifs électroluminescents (120), afin de déterminer si ledit au moins un objet routier (70) se trouve dans les zones d'ombre (SH1) générées en réponse à la désactivation d'au moins une partie des dispositifs électroluminescents (120).

9. Procédé d'adaptation active de l'éclairage selon la revendication 8, comprenant en outre :
l'identification des zones d'ombre (SH1) qui sont discontinues ;
l'identification d'une plage de coordonnées angulaires de l'intervalle (GP) entre les zones d'ombre discontinues (SH1) ; et
le stockage correspondant des dispositifs électroluminescents (120) correspondant aux zones d'ombre discontinues (SH1) ainsi que de la plage de coordonnées angulaires, afin de déterminer si ledit au moins un objet routier (70) se trouve dans l'intervalle (GP) entre les zones d'ombre (SH1) générées en réponse à la désactivation d'au moins une partie des dispositifs électroluminescents (120).
